Europäisches Patentamt

European Patent Office

Office européen des brevets

(11) Publication number: **0 113 565**
**B1**

(12) **EUROPEAN PATENT SPECIFICATION**

(45) Date of publication of patent specification: **03.09.86**

(21) Application number: **83307658.1**

(22) Date of filing: **15.12.83**

(51) Int. Cl.⁴: **B 01 D 46/10**

(54) Filter unit.

(30) Priority: **15.12.82 MX 195654**
**10.10.83 MX 199060**

(43) Date of publication of application:
**18.07.84 Bulletin 84/29**

(45) Publication of the grant of the patent:
**03.09.86 Bulletin 86/36**

(84) Designated Contracting States:
**DE FR GB IT SE**

(56) References cited:
**FR-A-1 438 478**
**US-A-3 418 794**
**US-A-4 197 099**

(73) Proprietor: **Lundberg, Bo Erik Hollsten**
**111 Heroes de Padierna St. Col. San Jeronimo**
**Lidice**
**MX-10200 Mexico D.F. (MX)**

(72) Inventor: **Lundberg, Bo Erik Hollsten**
**111 Heroes de Padierna St. Col. San Jeronimo**
**Lidice**
**MX-10200 Mexico D.F. (MX)**

(74) Representative: **Smith, Philip Antony et al**
**REDDIE & GROSE 16 Theobalds Road**
**London WC1X 8PL (GB)**

Courier Press, Leamington Spa, England.

## Description

This invention relates to a filter unit comprising a sheet of filter medium having its margins secured to a mounting frame by means of a clamping frame.

Such a filter unit is described in U.S. Patent Specification No. US—A—3,418,794 which shows a moulded synthetic resin rectangular mounting frame and a wire clamping frame. The mounting frame has an inturned flange formed integrally with a grid for the support of the filter sheet. The mounting frame has a groove along one side to receive the clamping frame and a bracket at the opposite side under which an offset section of the clamping frame is engaged.

The filter unit described in US—A—3,418,794 is one attempt to meet the need to manufacture filter units in such a manner that, in case of wearing out of said filtering material, the same can be replaced without the disposal of the entire filter unit being necessary. Furthermore, said replacement must constitute a simple operation, requiring no special tools nor specilized workmanship.

A substantial amount of time and money has been invested until now in the continuous search for a suitable solution, so as to lower the costs of said filter units, make easier the assembling of the filtering fabric and provide a product with utmost suitable characteristics. However, until now no satisfactory results have been obtained since although certain filter panels are efficient the costs thereof are quite high and conversely, those lower priced filter units are of quality and efficiency substantially under the range acceptable for the good fulfilment of their purpose. Another further negative charactistic suffered by the present filters is the relatively difficult assembling thereof, as well as their high costs of manufacture.

The filter unit of this application satisfactorily solves the problems inherent to the assembling and disassembling of said units as well as those relating the mounting of said filtering fabric on the assemblingh frame.

A filter unit according to the invention is characterized in that the margins of the sheet are turned over the outside of the mounting frame and the clamping frame is pressed through the mounting frame to lie in a plane between the plane of the filter sheet and the plane of the mounting frame such that the turned-over margins of the sheet are gripped between the clamping frame and the mounting frame and between the clamping frame and the rest of the filter sheet.

In one embodiment of the invention the clamping frame has at least one flattened vertex to facilitate insertion in the mounting frame. The filter sheet may be mounted on the frame by preforming the same through the application of heat, pressure and steam to those areas previously bent over or through the use of an adhesive material previously adhered to the peripheral edge of said filtering material.

The mounting, stretching and supporting of the filtering fabric is thus made easier. Replacement of the filtering material can be effected in a relatively short period of time and without the requirement of specialized workmanship.

The costs of assembling a filter unit are lowered, through the reduction of the time required therefor, without involving in said action assembling techinques other than those already employed in the prior art.

The manufacture and assembling of air filtering panels can be carried out with a mimimum amount of stages, at a lower cost and with reliable sealing characteristics, construction and assembling which provide for the avoiding of non-filtered air leaks between the structural parts thereof and also between the mounting or assembling frame of said filtering panels.

In the drawings:

Figure 1 is a perspective view of a filter unit in accordance with this invention completely assembled.

Figure 2 is a frontal view showing the configuration of the filtering fabric according to one embodiment of the invention.

Figure 3 shows in a frontal view the filtering material arranged on the assembling frame prior to the attachment of said filtering material to said frame.

Figures 4a and 4b are perspective views of the two frames employed for the assembling, stretching and supporting of said filtering material, according to two embodiments of this invention.

figures 5a to 5c are sectional views according to the embodiment as shown in Figure 4a, of the various assembling stages or integration stages of said filter unit; and

Figures 6a to 6c are sectional views according to the embodiment as shown in Figure 4b, of the various assembling stages or integration stages of the filter unit.

In the accompanying drawings the same reference numbers are employed to illustrate similar parts in the two embodiments.

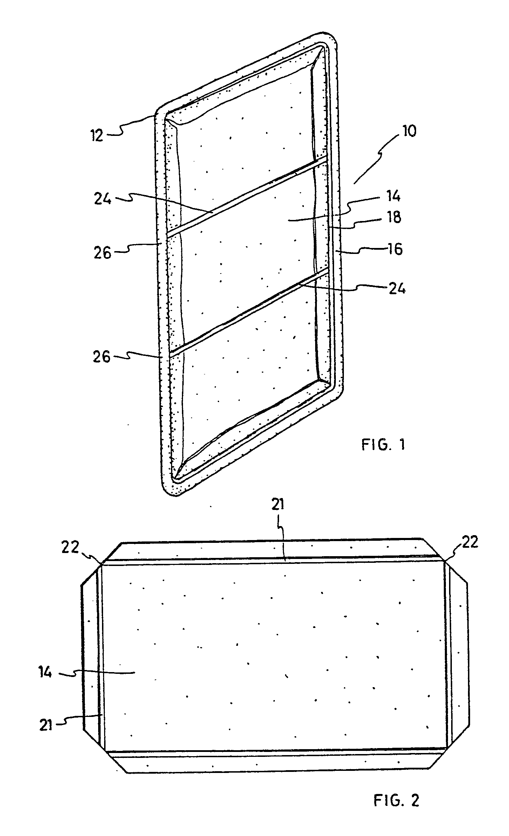

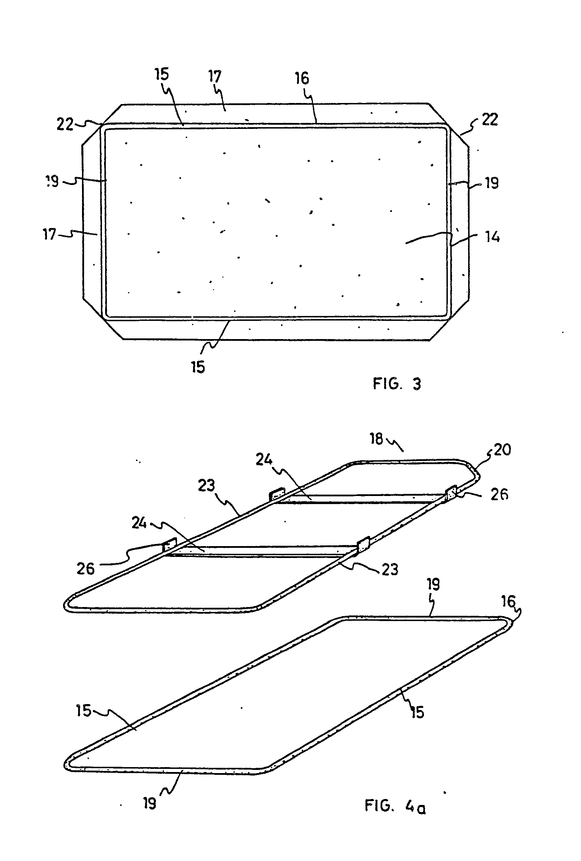

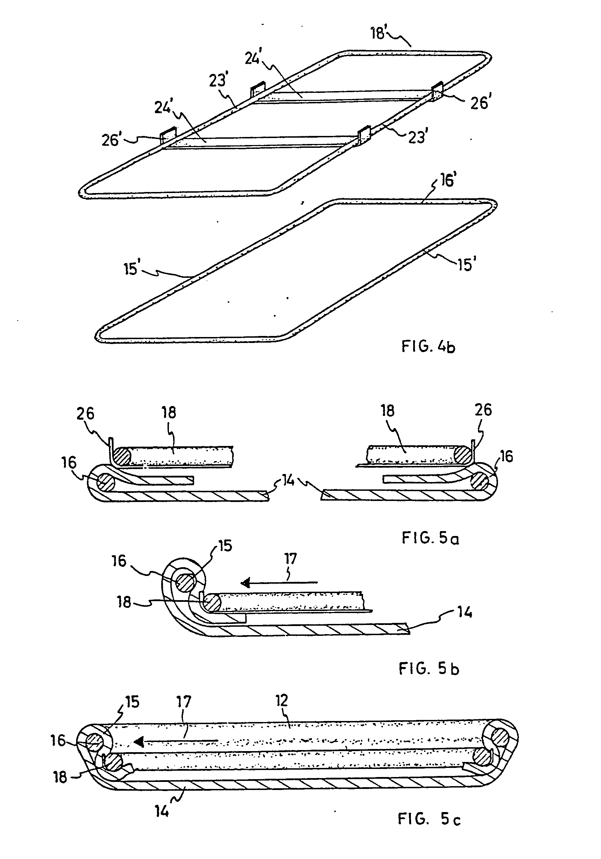

As shown in the annexed figures, mainly in Figures 1 to 3, 4a and 4b, the filter unit 10 of this invention is comprised of a composite frame 12 and a sheet 14 of filtering fabric wherein said composite frame 12 is constituted by two independent frames 16 and 18. According to one embodiment as shown in Figure 4a, said frame 18 is of dimensions slightly smaller than said frame 16 and made up from wire or any other suitable material to provide a filter unit with a structural strength suitable to provide said filter sheet 14 with the tensioning and support needed for the good performance thereof. In the embodiment of Figure 4b, said frames 16' and 18' are of substantially equal dimensions.

As can be seen in Figures 4a and 4b, the stretching and clamping frame 18 is provided with cross braces or reinforcing elements 24 in such a number and arrangement that the same strengthen the longitudinal elements 23 thereof and, at the same time, serve as supports for the filter sheet 14 when the same has been assembled as a part of the filter unit 10. The above mentioned braces 24 are extended slightly above the elements 23, thus forming small ears 26 contributing to the alignment of the mounting frame 16 and the filter sheet 14 with the stretching and clamping frame 18.

As one of the objects of the frame 18 is to support the filter sheet 14, it is to be understood that, instead of the braces 24, the frame can be provided with a mesh sized to the frame 18 and even could be replaced by an apertured plate which will comply with the purpose of the frame 18.

The clamping frame 18, in the embodiment of Figure 4a has at least one of the vertexs thereof 20 flattened in order to facilitate the assembling or integration of said filter unit 10.

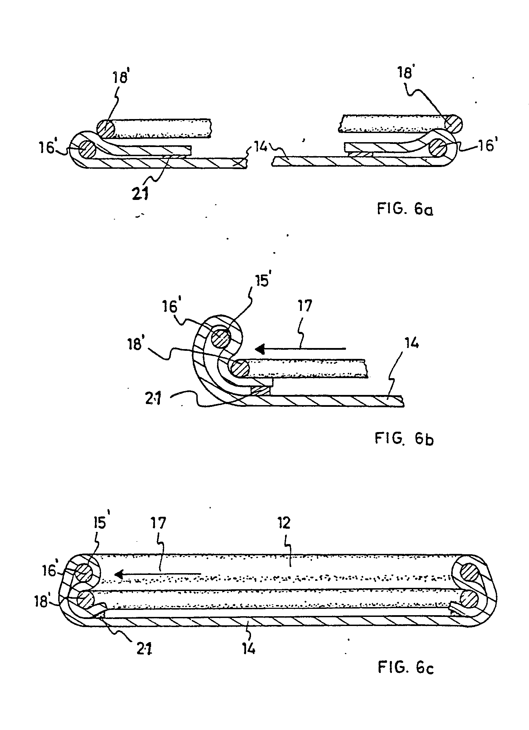

The mounting frame 16 for the assembling of the filter sheet 14 is made with longitudinal and transversal dimensions slightly greater than those of the clamping frame 18. Both the greater sizes of the frame 16 and the flattened vertex 20 of the frame 18 are for the purpose of facilitating the assembling of said filtering unit, as can be deduced from Figures 5a to 5c to be discussed later therein, although the frame 16 and 18 also can be made with similar dimensions and even without said flattened vertex 20, according to the showing of Figures 4b and 6a to 6c.

There has been illustrated in Figure 2 the shape of the filter sheet 14, the corners 22 of which have been trimmed at 45°. The trimming serves to avoid the accumulation of material at the corners of the frames 16 and 18. On one of the surfaces of the filter sheet 14, there are double-sided adhesive strips 21 joined to said filter sheet through a contact adhesive and the free surface of which is provided with a tearoff paper protecting the adhesive on the strip 21 when said filter sheet is in its position non-assembled on the frame 16.

In accordance with the preferred embodiment of the invention, as shown in Figure 3 of the accompanying drawings, the filter sheet 14 is shaped on the frame 16 by bending the flanges 17 thereof onto the structural elements 15 and 19 forming the sides of the frame 16, by applying heat, pressure and steam, and withe no other expedient being needed; said solution facilitating and making cheaper the assembling costs for said filter.

Referring to Figures 5a to 5c, particularly Figure 5a, there can be seen the arrangement of the filter sheet 14 on the frame 16 and also the first stage of assembling the two frames 16 and 18. As will be understood, when the frame 18 is of smaller size than the frame 16, the assembling of the frames is easier, especially when the flattened vertex 20 is provided on the frame 18.

In the embodiments of Figures 6a to 6c, said assmbling is also obtained, although with a certain degree of difficulty due to the fact that both frames 16 and 18 are of substantially the same dimensions. Said difficulty is overcome thanks to the flexibility of the material of which said frames are made.

On the other side, the stretching and supporting actions of the frame 18 are obvious, as well as the effect of said ears 26 avoiding the displacement of the frame 16 relative to the frame 18, when the filter unit 10 is assembled.

As can be seen in Figures 3, 5a to 5c and 6a to 6c, the assembling of said filter unit is started when the filter sheet 14 is arranged on the frame 16, either by means of heat, pressure and steam or by means of an adhesive strip 21. Thereafter, the frame 18 is inserted by arranging the same over the frame 16, and starting to fit closely one of the sides thereof into the corresponding side of the frame 16, and thus stretching said filter sheet 14, and finally inserting the end of the frame 18 provided with the flattened vertex 20. In the embodiment of Figures 6a to 6c which side of the frame 18 is inserted first becomes irrelevant.

The assembling of the frame 18 is also expedited if the structural characteristics of the frame 18 are taken into consideration. In fact, the frame 18 can be slightly bent without a substantial deformation, thus providing adequate shaping and stretching of the filter sheet 14.

**Claims**

1. A filter unit comprising a sheet (14) of filter medium having its margins secured to a mounting frame (16) by means of a stretching and clamping frame (18) characterized in that the margins of the sheet (14) are turned over the outside of the mounting frame (16) and the stretching and clamping frame (18) is pressed through the mounting frame to lie in a plane between the plane of the filter sheet and the plane of the mounting frame such that the turned-over margins of the sheet are gripped between the clamping frame and the mounting frame and between the clamping frame and the rest of the filter sheet.

2. A filter unit as claimed in claim 1 characterized in that the turned-over margins of the sheet (14) are conformed to the mounting frame (16) by heat, pressure and steam.

3. A filter unit as claimed in claim 1 characterized by an adhesive strip (21) attaching the turned-over margins of the filter sheet (14) to the rest of the filter sheet.

4. A filter unit as claimed in claim 1, 2 or 3 characterized in that the corners of the filter sheet (14) are trimmed (at 22) to avoid accumulation of meterial at the corners of the frames.

5. A filter unit as claimed in any of the preceding claims characterized in that the stretching and clamping frame (18) has at least one flattened vertex (20).

6. A filter unit as claimed in any of the preceding claims characterized in that the stretching and clamping frame (18) has reinforcing elements (24) extending between the longitudinal sides thereof.

7. A filter unit as claimed in claim 6 characterized in that the ends of the reinforcing elements (24) project beyond the perimeter of the stretching and clamping frame (18) to form locating ears (26).

8. A filter unit as claimed in any of the preceding claims characterized in that the stretching and clamping frame (18) is formed by an apertured plate.

## Patentansprüche

1. Filtereinheit mit einem Blatt (14) eines Filtermediums, dessen Ränder mit Hilfe eines Spann- und Klemmrahmes (18) en einem Tragrahmen (16) befestigt sind, dadurch gekennzeichnet, daß die Ränder des Blattes (14) über die Außenseite des Tragrahmens (16) ungeschlagen sind und daß der Spann- und Klemmrahmen (18) durch den Tragrahmen gedrückt ist, so daß er in einer Ebene zwischen der Ebene des Filterblattes und der Ebene des Tragrahmens liegt, so daß die umgeschlagenen Ränder des Blattes zwischen dem Spann- und Klemmrahmen und dem Tragrehmen und zwischen dem Spann- und Klemmrahmen und dem Rest des Filterblattes eingeklemmt sind.

2. Filtereinheit nach Anspruch 1, dadurch gekennzeichnet, daß die ungeschlagenen Ränder des Blattes (14) durch Hitze, Druck und Dampf an den Tragrahmen (16) angepaßt sind.

3. Filtereinheit nach Anspruch 1, gekennzeichnet, durch einen Klebestreifen (21), der die umgeschlagenen Ränder des Filterblattes (14) an dem Rest des Filterblattes befestigt.

4. Filtereinheit nach einem der Ansprüche 1 bis 3 , dadurch gekennzeichnet, daß die Ecken des Filterblattes (14) bei (22) abgeschnitten sind, um eine Ansammlung von Material an den Ecken des Rahmens zu vermeiden.

5. Filtereinheit nach einem der vorangehenden Ansprüche, dadurch gekennzeichnet, daß der Spann- und Klemmrahmen (18) wenigstens einen abgeflachten Scheitel (20) aufweist.

6. Filtereinheit nach einem der vorangehenden Ansprüche, dadurch gekennzeichnet, daß der Spann- und Klemmrahmen (18) Verstärkungselemente (24) aufweist, die sich zwischen seinen Längs-seiten erstrecken.

7. Filtereinheit nach Anspruch 6, dadurch gekennzeichnet, daß die Enden der Verstärkungselemente (24) über den Umfang des Spann- und Klemmrahmens (18) vorstehen, um Führungsnasen (26) zu bilden.

8. Filtereinheit nach einem der vorangehenden Ansprüche, dadurch gekennzeichnet, daß der Spann- und Klemmrahmen (18) durch eine Lochplatte gebildet ist.

## Revendications

1. Unité de filtration comprenant une feuille (14) d'agent filtrant ayant ses bords fixés sur un cadre-support (16) au moyen d'un cadre (18) d'étirage et de serrage, caractérisée en ce que les bords de la feuille (14) son repliés au dessus de l'extérieur du cadre-support (16) at la cadre (18) d'étirage et de serrage est poussé au travers du cadre-support pour se trouver dans un plan situé entre le plan de la feuille filtrante et le plan du cadre-support, de telle sorte que les bords repliés de la feuille sont serrés entre le cadre d'étirage et de serrage et le cadre-support, et entre le cadre de serrage et le reste de la feuille filtrante.

2. Unité de filtration selon la revendication 1 caractérisée en ce que les bords repliés de la feuille (14) sont adaptés à la forme du cadre-support sous l'effet de la chaleur, de la pression et de la vapeur.

3. Unité de filtration selon la revendication 1 caractérisée en ce qu'elle comporte une bande adhésive (21) qui fixe les bords repliés de la feuille filtrante (14) au reste de la feuille filtrante.

4. Unité de filtration selon l'une des revendications 1, 2 ou 3, caractérisée en ce que les angles de la feuille filtrante (14) sont coupés (en 22) pour éviter l'accumulation de matière aux coins des cadres.

5. Unité de filtration selon l'une quelconque des revendications précédentes, caractérisée en ce que le cadre (18) d'étirage et de serrage comporte au moins un par coupé (20).

6. Unité de filtration selon l'une quleconque des revendications précédentes, caractérisée en ce que le cadre (18) d'étirage et de serrage comporte des éléments de reinforcement (24) s'étendant entre ses côtes longitudinaux.

7. Unité de filtration selon la revendication 6, caractérisée en ce que les extrémités des éléments de renforcement (24) débordent au delà du périmètre du cadre (18) d'étirage et de serrage pour former des oreilles (26) de positionnement.

8. Unité de filtration selon l'une quelconque des revendications précédentes, caractérisée en ce que le cadre (18) d'étirage et de serrage est formé par une plaque preforée.

12 ␣

24 ␣

26 ␣

26 ␣

10

14
18
16

24

**FIG. 1**

21

22

22

14

21

**FIG. 2**

FIG. 3

FIG. 4a

2

FIG. 4b

FIG. 5a

FIG. 5 b

FIG. 5 c

FIG. 6a

FIG. 6b

FIG. 6c

4